# EUROPEAN PATENT APPLICATION

(11) **EP 2 148 447 A1**
(43) Date of publication of application: **27.01.2010**
(21) Application number: 07743316.7
(22) Date of filing: 14.05.2007
(51) Int. Cl.: H04B 1/16, H04B 7/26

(54) **OBSTACLE DETECTOR, WIRELESS RECEIVER, WIRELESS TRANSMITTER, AND WIRELESS COMMUNICATION SYSTEM**

(71) Applicant: Mitsubishi Electric Corporation, Chiyoda-ku Tokyo 100-8310 (JP)
(72) Inventor: TSUSHIMA, Naoyuki, Tokyo 100-8310 (JP); ABUKAWA, Masahiro, Tokyo 100-8310 (JP); MURAYAMA, Shiyuu, Tokyo 100-8310 (JP); AKATSU, Shinji, Tokyo 100-8310 (JP); OKUMURA, Nobuyoshi, Tokyo 100-8310 (JP)
(74) Representative: Pfenning, Meinig & Partner GbR
(86) International application number: PCT/JP2007/059881
(87) International publication number: WO 2008/139607

(57) **Abstract**

A radio receiving device acquires obstacle information showing a direction in which an obstacle is existing from an obstacle detecting device 12, and controls radio receiving antennas 31-1 to 31-M according to the obstacle information so as to receive an electric wave. As a result, the radio receiving device can improve the quality of the reception of an electric wave even when an obstacle 3 is existing, and can also respond quickly to a rapid change in electric waves.

## Description

### Field of the Invention

The present invention relates to an obstacle detecting device that monitors the receiving status of electric waves transmitted from GPS satellites so as to detect an obstacle existing in an area surrounding the obstacle detecting device, a radio receiving device that controls antennas according to the results of the detection by the obstacle detecting device so as to receive electric waves, a radio transmitting device that controls antennas according to the results of the detection by the obstacle detecting device so as to transmit electric waves, and a radio communications system that controls antennas according to the results of the detection by the obstacle detecting device so as to transmit or receive electric waves.

### Background of the Invention

For example, in a case in which either a radio receiving device for receiving a TV broadcast or a radio transmitting device for transmitting by radio data to outside the device is mounted in a moving object (e.g. a car) and is used, obstacles existing in an area surrounding the moving object, such as buildings and trees, vary greatly as the moving object moves. Therefore, there are cases in which the received levels of electric waves vary greatly due to a multipath caused by reflection of the electric waves by obstacles, phasing caused by absorption of the electric waves into obstacles, etc., and carrying out stable radio communications with high quality becomes difficult.

To solve this problem, a conventional radio receiving device is provided with a plurality of antennas, and, when receiving an electric wave, selects an antenna having a low error rate and a high received radio wave intensity from among the plurality of antennas to receive an electric wave.
Another conventional radio receiving device uses a diversity technology of acquiring a strong electric wave by making the outputs of a plurality of antennas be in phase with one another, and then combining the electric waves received by the antennas (refer to patent reference 1).

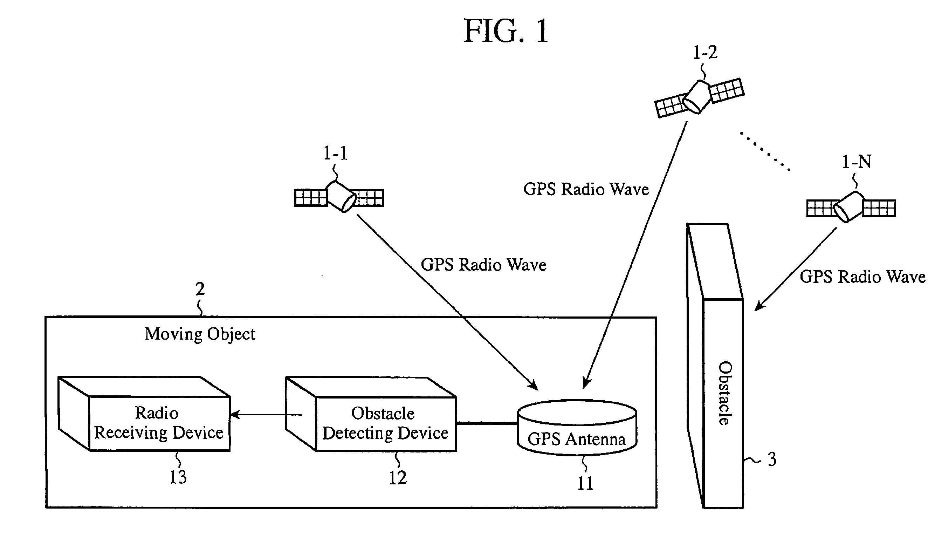

[Patent reference 1] JP,6-233158,A (see paragraph numbers from [0008] to [0019] and Fig. 1)

Because conventional radio receiving devices are constructed as mentioned above, they can use a technology for selecting a receive antenna or a diversity technology to improve the reception quality of an electric wave received if they can receive electric waves by using a plurality of antennas and can analyze the characteristics of the electric waves, such as the received levels of the electric waves or phase differences among them. A problem is, however, that they cannot use any one of the technology for selecting a receive antenna and the diversity technology unless they analyze the characteristics of the received electric waves, such as the received levels of the electric waves or phase differences among them, and therefore they cannot respond quickly to a rapid change in the electric waves.
Another problem is that because an antenna oriented toward a direction in which an obstacle is existing may also receive an electric wave reflected by the obstacle, the simple method of selecting a receive antenna or combining electric waves according to the received levels of the electric waves or phase differences among them cannot improve the quality of reception of electric waves.

The present invention is made in order to solve the above-mentioned problems, and it is therefore an object of the present invention to provide a radio receiving device and a radio communications system which, even when an obstacle is existing, can improve the quality of reception of electric waves and can also respond quickly to a rapid change of the electric waves.
It is another obj ect of the present invention is to provide a radio transmitting device and a radio communications system which, even when an obstacle is existing, can improve the quality of reception of an electric wave in a communications partner which receives the electric wave.
It is a further object of the present invention is to provide an obstacle detecting device which can detect an obstacle existing in an area surrounding the obstacle detecting device.

### Disclosure of the Invention

A radio receiving device in accordance with the present invention includes an obstacle information acquiring means for acquiring obstacle information showing a direction in which an obstacle is existing from an obstacle detecting device, and a radio receiving means controls a plurality of radio receiving antennas according to the obstacle information acquired by the obstacle information acquiring means so as to receive an electric wave.

As a result, the present invention provides an advantage of being able to improve the quality of the reception of an electric wave even when an obstacle is existing, and also respond quickly to a rapid change in electric waves.

### Brief Description of the Figures

[Fig. 1] Fig. 1 is a block diagram showing a radio communications system in accordance with Embodiment 1 of the present invention;
[Fig. 2] Fig. 2 is an explanatory drawing showing an arrangement of GPS satellites in two dimensions;
[Fig. 3] Fig. 3 is a block diagram showing an obstacle detecting device in accordance with Embodiment 1 of the present invention;
[Fig. 4] Fig. 4 is a flow chart showing a process carried out by an obstacle detecting unit 25 of the obstacle detecting device in accordance with Embodiment 1 of the present invention;
[Fig. 5] Fig. 5 is a block diagram showing a radio receiving device in accordance with Embodiment 1 of the present invention;
[Fig. 6] Fig. 6 is an explanatory drawing showing the shape and position of an obstacle 3;
[Fig. 7] Fig. 7 is a block diagram showing a radio communications system in accordance with Embodiment 4 of the present invention; and
[Fig. 8] Fig. 8 is a block diagram showing a radio transmitting device in accordance with Embodiment 4 of the present invention. Preferred Embodiments of the Invention

Hereafter, in order to explain this invention in greater detail, the preferred embodiments of the present invention will be described with reference to the accompanying drawings.

### Embodiment 1.

Fig. 1 is a block diagram showing a radio communications system in accordance with Embodiment 1 of the present invention.
In Fig. 1, GPS satellites 1-1 to 1-N are orbiting around the Earth, and each of them transmits a GPS radio wave on which GPS data including not only operation information about itself (information showing on what kind of orbit each of the GPS satellites is orbiting around the Earth), but also operation information about all the GPS satellites which are orbiting around the Earth are piggybacked.
Although the N GPS satellites are shown in Fig. 1, GPS satellites which are orbiting around the Earth at positions which are not viewed from a moving object 2 also exist, and more than the N GPS satellites are actually orbiting around the Earth.

The GPS radio wave transmitted from each of the GPS satellites 1-1 to 1-N is a microwave having high straight advancing property. Therefore, a GPS antenna 11 can receive the GPS radio wave from each of the GPS satellites 1-1 to 1-N unless any obstacle is existing in the straight propagation path connecting between each of the GPS satellites 1-1 to 1-N and the GPS antenna 11, whereas if an obstacle is existing in the straight propagation path connecting between each of the GPS satellites 1-1 to 1-N and the GPS antenna 11, the GPS antenna 11 cannot receive the GPS radio wave from each of the GPS satellites 1-1 to 1-N because the GPS radio wave is blocked by the obstacle.

For example, the moving object 2, such as a car, is provided with, as well as the GPS antenna 11, an obstacle detecting device 12 and a radio receiving device 13.
A building, a tree, or the like existing in an area surrounding the moving object 2 can be an obstacle 3. In the example of Fig. 1, a state in which the GPS radio wave transmitted from the GPS satellite 1-N is blocked because an obstacle 3 is existing, and hence the GPS radio wave does not reach the GPS antenna 11 of the moving object 2 is shown.

The GPS antenna 11 receives GPS radio waves transmitted from all the GPS satellites including the GPS satellites 1-1 to 1-N.
The obstacle detecting device 12 monitors the receiving status of the electric waves transmitted from all the GPS satellites including the GPS satellites 1-1 to 1-N so as to detect an obstacle 3 existing in an area surrounding the moving object 2.
The radio receiving device 13 controls radio receiving antennas thereof according to the results of the detection by the obstacle detecting device 12 so as to receive an electric wave.

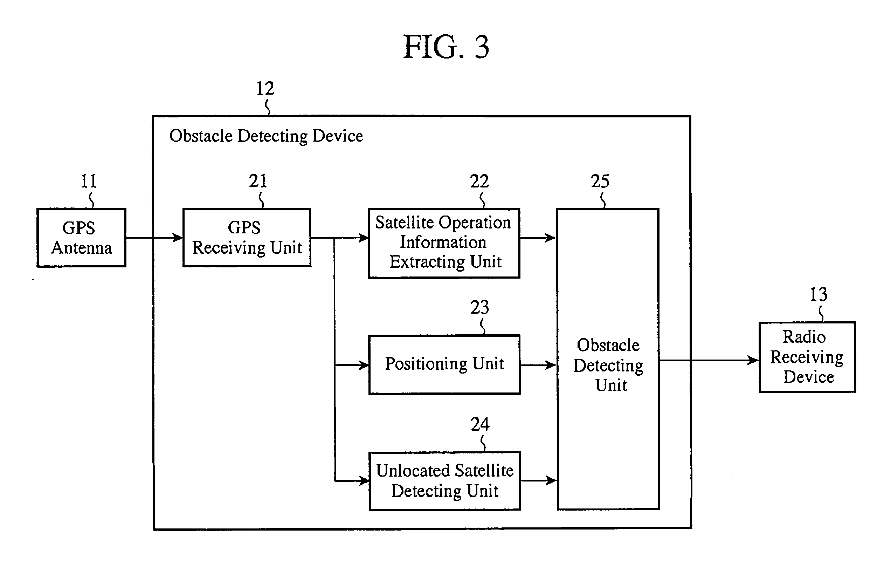

Fig. 3 is a block diagram showing the obstacle detecting device in accordance with Embodiment 1 of the present invention. In the figure, a GPS receiving unit 21 carries out a receiving process of receiving the GPS radio waves received by the GPS antenna 11, and also carries out a process of extracting the GPS data from the GPS radio waves. The GPS receiving unit 21 constructs a GPS receiving means.
A satellite operation information extracting unit 22 carries out a process of extracting the operation information about each of the GPS satellites which is included in the GPS data extracted by the GPS receiving unit 21. The satellite operation information extracting unit 22 constructs an operation information extracting means.

A positioning unit 23 carries out a process of measuring the current position (latitude, longitude, and altitude) of the moving object 2 with reference to the GPS data extracted by the GPS receiving unit 21. The positioning unit 23 constructs a positioning means.
An unlocated satellite detecting unit 24 monitors the receiving status of the GPS radio waves of the GPS receiving unit 21, and carries out a process of detecting a GPS satellite (in the example of Fig. 1, the GPS satellite 1- N) which is not being able to be located. The unlocated satellite detecting unit 24 constructs an unlocated satellite detecting means.

When the unlocated satellite detecting unit 24 detects the GPS satellite 1-N which is not being able to be located, the obstacle detecting unit 25 carries out a process of referring to the operation information extracted by the satellite operation information extracting unit 22 to grasp the position of the GPS satellite 1-N, and detecting a direction in which an obstacle 3 is existing from both the position of the GPS satellite 1-N and the current position of the moving object 2 measured by the positioning unit 23. The obstacle detecting unit 25 constructs an obstacle detecting means.

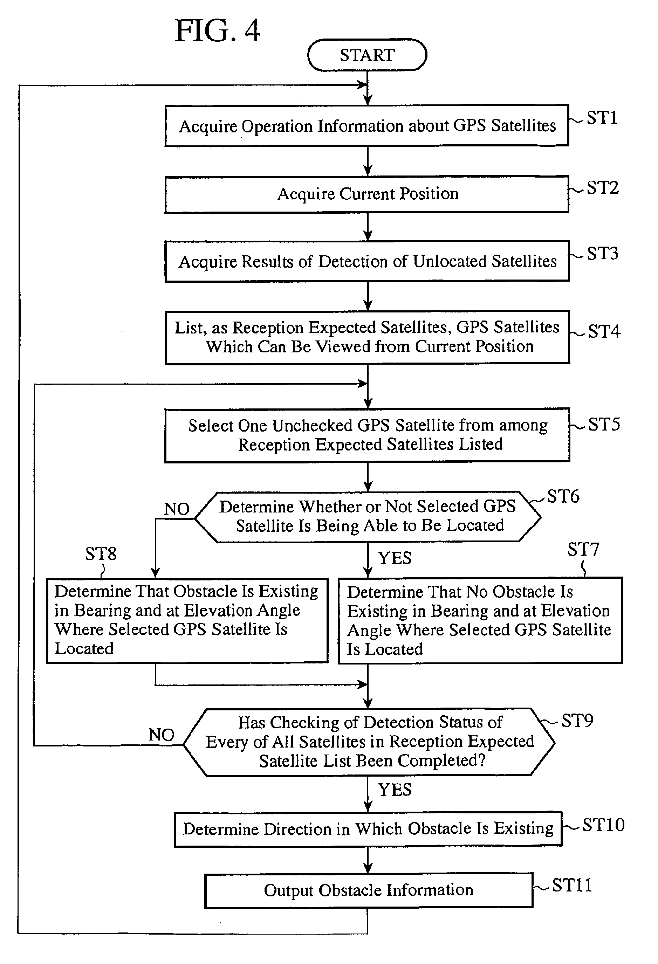

Fig. 4 is a flow chart showing the process carried out by the obstacle detecting unit 25 of the obstacle detecting device in accordance with Embodiment 1 of the present invention.

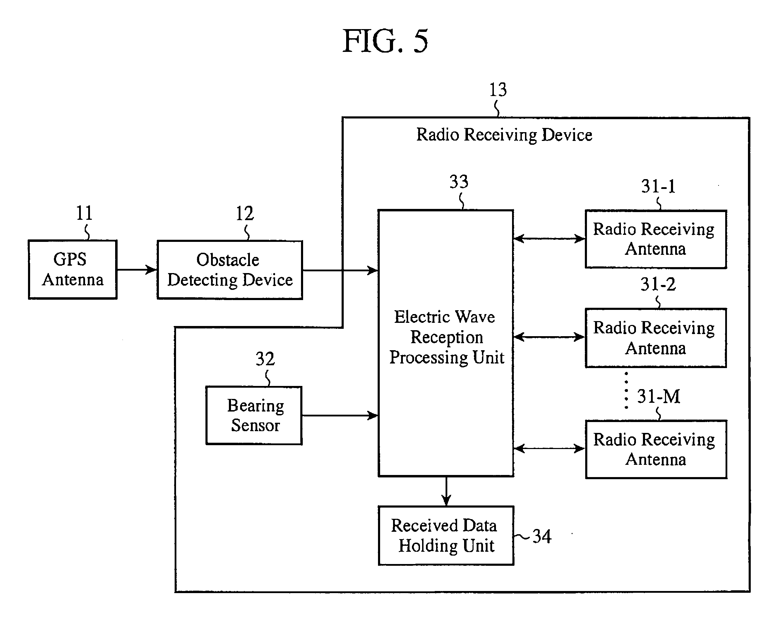

Fig. 5 is a block diagram showing the radio receiving device 13 in accordance with Embodiment 1 of the present invention. In this figure, the radio receiving antennas 31-1 to 31-M are arranged in such a way as to surround the moving object 2, and are oriented respectively toward different directions.
A bearing sensor 32 measures the bearing of the moving object 2 (e.g. the traveling direction of the moving object 2) .

An electric wave reception processing unit 33 acquires obstacle information showing the direction in which the obstacle is existing from the obstacle detecting device 12, and also acquires bearing information showing the bearing measured by the bearing sensor 32. According to both the obstacle information and the bearing information, the electric wave reception processing unit carries out a receiving process of controlling the radio receiving antennas 31-1 to 31-M so as to receive an electric wave. The electric wave reception processing unit 33 constructs an obstacle information acquiring means and a radio wave receiving means.
A received data holding unit 34 carries out a process of demodulating the electric wave received by the electric wave reception processing unit 33 to generate data, and holding the data.

Next, the operation of the radio communications system will be explained.

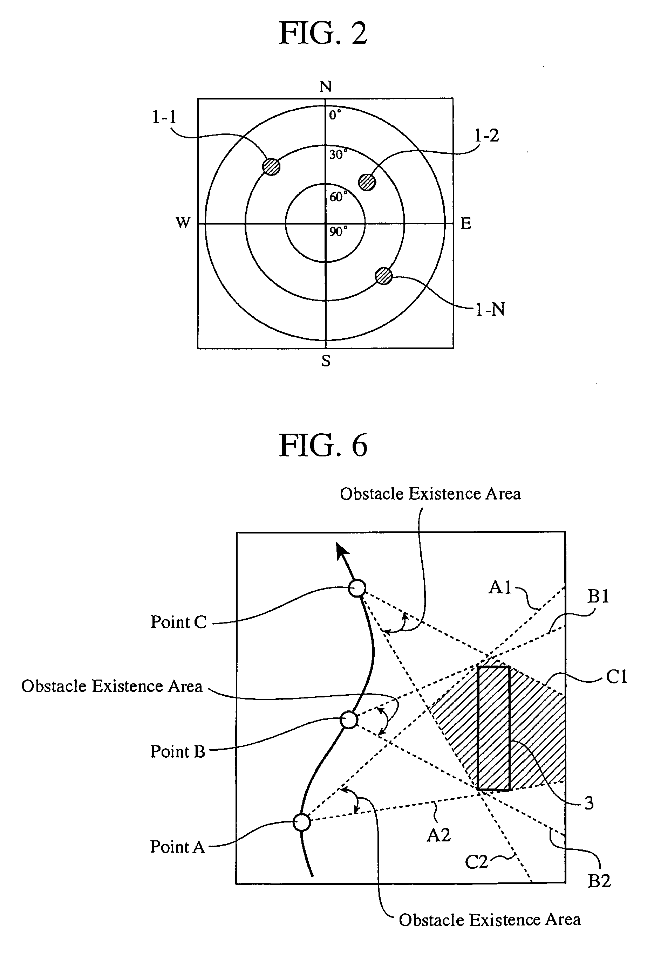

Fig. 2 is an explanatory drawing showing the arrangement of the GPS satellites in two dimensions.
More specifically, in Fig. 2, assuming that there is a half spherical surface covering over the GPS antenna 11, and the GPS satellites 1-1 to 1-N can be arranged pseudoly on the half spherical surface, the positions of the GPS satellites 1-1 to 1-N on the half spherical surface when viewed downwardly from the sky above the half spherical surface covering over the GPS antenna 11 are shown in two dimensions.

Fig. 2 shows that the elevation angles of the GPS satellites 1-1 to 1-N increase as they are positioned closer to the center of the circle, i. e. decrease as they are positioned closer to the perimeter of the circle.
Furthermore, in Fig. 2, the downward direction on the page shows the south, the upward direction on the page shows the north, the rightward direction on the page shows the east, and the leftward direction on the page shows the west.
For example, the GPS satellite 1-1 is positioned in the northwest direction when viewed from the GPS antenna 11, and is positioned at a location having an elevation angle of 30 degrees with respect to the GPS antenna 11.
Furthermore, the GPS satellite 1-2 is positioned in the northeast direction when viewed from the GPS antenna 11, and is positioned at a location having an elevation angle of 45 degrees with respect to the GPS antenna 11.
In addition, the GPS satellite 1-N is positioned in the southeast direction when viewed from the GPS antenna 11, and is positioned at a location having an elevation angle of 30 degrees with respect to the GPS antenna 11.

The operation information about the GPS satellites showing in which bearing each of the GPS satellites 1-1 to 1-N is positioned when viewed from the GPS antenna 11, and what elevation angle each of the GPS satellites 1-1 to 1-N has with respect to the GPS antenna 11 is piggybacked onto the GPS radio wave transmitted from each of the GPS satellites. Therefore, the moving object can know the operation information about all the GPS satellites even if it receives the GPS radio wave from any one of the GPS satellites.

While the GPS antenna 11 mounted in the moving object 2 receives the GPS radio waves transmitted from the GPS satellites 1-1 and 1-2 normally, the GPS radio wave transmitted from the GPS satellite 1-N is blocked by the obstacle 3 because the obstacle 3 is existing on the straight propagation path connecting between the GPS antenna 11 and the GPS satellite 1-N, and therefore the GPS antenna 11 cannot receive the GPS radio wave transmitted from the GPS satellite 1-N.
When the GPS antenna 11 receives the GPS radio waves transmitted from the GPS satellites 1-1 and 1-2, the GPS receiving unit 21 of the obstacle detecting device 12 carries out a receiving process of receiving those GPS radio waves and extracts the GPS data from those GPS radio waves.

When the GPS receiving unit 21 extracts the GPS data from the GPS radio waves, the satellite operation information extracting unit 22 of the obstacle detecting device 12 extracts the operation information about the GPS satellites which is included in the GPS data.
In this embodiment, the case in which the satellite operation information extracting unit extracts the operation information from the GPS data, assuming that the operation information about the GPS satellites are included in the GPS data, is shown. In a case in which the operation information about the GPS satellites is piggybacked onto a GPS radio wave independently of the GPS data, the satellite operation information extracting unit extracts the operation information from the GPS radio wave.

When the GPS receiving unit 21 extracts the GPS data from the GPS radio waves, the positioning unit 23 of the obstacle detecting device 12 measures the current position (latitude, longitude, altitude) of the moving object 2 (the GPS antenna 11) with reference to the GPS data.
Because the process of measuring the current position is a known technique which is implemented by, for example, a navigation apparatus, the explanation of the process will be omitted hereafter.

The unlocated satellite detecting unit 24 of the obstacle detecting device 12 monitors the receiving status of the GPS radio waves received by the GPS receiving unit 21 so as to detect a GPS satellite which is not being able to be located.
More specifically, if the GPS receiving unit 21 is being able to receive normally an electric wave transmitted from a GPS satellite, the unlocated satellite detecting unit 24 determines that the GPS receiving unit is being able to detect the GPS satellite, whereas when the GPS receiving unit 21 is not being able to receive normally an electric wave transmitted from a GPS satellite, the unlocated satellite detecting unit 24 determines that the GPS receiving unit is not being able to detect the GPS satellite.

Because the GPS receiving unit 21 cannot receive normally the GPS radio wave transmitted from the GPS satellites 1-N in the example of Fig. 1, the unlocated satellite detecting unit detects the GPS satellite 1-N as a GPS satellite which is not being able to be located.
Furthermore, because the GPS receiving unit cannot also receive any GPS radio waves from GPS satellites, which are not viewed from the moving object 2, other than the GPS satellites 1-1 to 1-N, the unlocated satellite detecting unit detects the GPS satellites other than the GPS satellites 1-1 to 1-N as GPS satellites which is not being able to be located.
In this embodiment, it is assumed that the unlocated satellite detecting unit 24 recognizes in advance all the GPS satellites which are currently orbiting around the Earth.

When the unlocated satellite detecting unit 24 determines that the GPS satellite 1-N is not being able to be located, the obstacle detecting unit 25 of the obstacle detecting device 12 refers to the operation information extracted by the satellite operation information extracting unit 22 so as to grasp the position of the GPS satellite 1-N, and then detects the direction in which the obstacle 3 is existing from both the position of the GPS satellite 1-N and the current position of the moving object 2 measured by the positioning unit 23.
Hereafter, the process carried out by the obstacle detecting unit 25 will be explained concretely with reference to Fig. 4.

The obstacle detecting unit 25 acquires the operation information about the GPS satellites from the satellite operation information extracting unit 22 (step ST1), and acquires the current position of the moving object 2 (the GPS antenna 11) from the positioning unit 23 (step ST2).
The obstacle detecting unit 25 also acquires the results of the detection of the unlocated satellites which are provided by the unlocated satellite detecting unit 24 (step ST3).

Next, the obstacle detecting unit 25 refers to both the operation information about the GPS satellites and the current position of the moving object 2 so as to list, as reception expected satellites, the GPS satellites which can be viewed from the current position (step ST4).
In the example of Fig. 1, the GPS satellites 1-1 to 1-N are listed as reception expected satellites.

Next, the obstacle detecting unit 25 selects one unchecked GPS satellite from among the reception expected satellites listed (step ST5), and refers to the results of the detection of the unlocated satellites which the obstacle detecting unit has acquired from the unlocated satellite detecting unit 24 so as to determine whether or not the selected GPS satellite is being able to be located (step ST6).
For example, when selecting the GPS satellite 1-1 or 1-2 as the unexamined GPS satellite, the obstacle detecting unit determines that the GPS satellite 1-1 or 1-2 is being able to be located because the GPS satellite 1-1 or 1-2 is not determined to be an unlocated satellite by the unlocated satellite detecting unit 24.
In contrast, when selecting the GPS satellite 1-N as the unexamined GPS satellite, the obstacle detecting unit determines that the GPS satellite 1-N is not being able to be located because the GPS satellite 1-N is determined to be an unlocated satellite by the unlocated satellite detecting unit 24.

When the obstacle detecting unit 25 determines that the GPS satellite which the obstacle detecting unit has selected in step ST5 is being able to be located, the obstacle detecting unit determines that no obstacle 3 is existing in the bearing and at the elevation angle where the GPS satellite is positioned (step ST7) .
Therefore, the obstacle detecting unit determines that no obstacle 3 is existing both in the bearing and at the elevation angle where the GPS satellite 1-1 is positioned, and in the direction and at the elevation angle where the GPS satellite 1-2 is positioned.

When the obstacle detecting unit 25 determines that the GPS satellite which the obstacle detecting unit has selected in step ST5 is not being able to be located, the obstacle detecting unit determines that an obstacle 3 is existing in the bearing and at the elevation angle where the GPS satellite is positioned (step ST8).
Therefore, the obstacle detecting unit determines that an obstacle 3 is existing in the bearing and at the elevation angle where the GPS satellite 1-N is positioned.
The obstacle detecting unit 25 examines the located status of each of all the reception expected satellites which are listed so as to determine the presence or absence of an obstacle 3 (step ST9).

When determining that an obstacle 3 is existing in the bearing and at the elevation angle where the GPS satellite 1-N is positioned, the obstacle detecting unit 25 grasps the position of the GPS satellite 1-N with reference to the operation information extracted by the satellite operation information extracting unit 22, and determines the direction in which the obstacle 3 is existing (the bearing and the elevation angle) from both the position of the GPS satellite 1-N and the current position of the moving object 2 measured by the positioning unit 23 (step ST10).
When determining the direction in which the obstacle 3 is existing, the obstacle detecting unit 25 outputs obstacle information showing the direction in which the obstacle 3 is existing to the radio receiving device 13 (step ST11).

When receiving the obstacle information from the obstacle detecting unit 25, the electric wave reception processing unit 33 of the radio receiving device 13 acquires bearing information showing the bearing of the moving object 2 from the bearing sensor 32.
When acquiring the bearing information from the bearing sensor 32, the electric wave reception processing unit 33 recognizes the direction (the bearing and the elevation angle) in which the obstacle 3 is existing when viewed from the moving object 2 with reference to the bearing information and the obstacle information, and specifies the radio receiving antenna oriented toward the direction in which the obstacle 3 is existing, and the radio receiving antennas each oriented toward a direction in which the obstacle 3 is not existing.
In this example, for the sake of simplicity, it is assumed that the radio receiving antenna oriented toward the direction in which the obstacle 3 is existing is the radio receiving antenna 31-1, and the radio receiving antennas each oriented toward a direction in which the obstacle 3 is not existing are the radio receiving antennas 31-2 to 31-M.

Because there is a high possibility that an electric wave coming from a direction in which the obstacle 3 is not existing has good quality while an electric wave coming from the direction in which the obstacle 3 is existing has bad quality due to the influence of reflection and attenuation, the electric wave reception processing unit 33 lowers the sensitivity of the radio receiving antenna 31-1 oriented toward the direction in which the obstacle 3 is existing and raises the sensitivity of each of the radio receiving antennas 31-2 to 31-M each oriented toward a direction in which the obstacle 3 is not existing, and carries out a receiving process of receiving electric waves.
As an alternative, the electric wave reception processing unit 33 does not use the radio receiving antenna 31-1 oriented toward the direction in which the obstacle 3 is existing, but uses the radio receiving antennas 31-2 to 31-M each oriented toward a direction in which the obstacle 3 is not existing, and carries out a receiving process of receiving an electric wave.

When the electric wave reception processing unit 33 receives an electric wave, the received data holding unit 34 of the radio receiving device 13 demodulates the electric wave so as to generate data from the electric wave, and holds the data.

As can be seen from the above description, in accordance with this Embodiment 1, the radio communications system is constructed in such a way as to acquire obstacle information showing a direction in which an obstacle is existing from the obstacle detecting device 12, and control the radio receiving antennas 31-1 to 31-M according to the obstacle information to receive an electric wave. Therefore, the present embodiment offers an advantage of being able to improve the quality of the reception of an electric wave even when an obstacle 3 is existing. Furthermore, the radio receiving device 13 does not need to analyze the received levels of electric waves received thereby and the phase difference among them, etc. in advance. Therefore, the present embodiment offers an advantage of being able to quickly respond to a rapid change in the electric waves received by the radio receiving device.

Furthermore, according to this Embodiment 1, the unlocated satellite detecting unit 24 for monitoring the receiving status of the GPS radio waves by the GPS receiving unit 21 so as to detect a GPS satellite 1-N which is not being able to be located is disposed, and the obstacle detecting unit 25 is constructed in such a way as to, when the unlocated satellite detecting unit 24 detects a GPS satellite 1-N which is not being able to be located, refers to the operation information extracted by the satellite operation information extracting unit 22 to grasp the position of the GPS satellite 1-N, and detects a direction in which an obstacle 3 is existing from both the position of the GPS satellite 1-N and the current position measured by the positioning unit 23. Therefore, the present embodiment offers another advantage of being able to detects an obstacle 3 existing in an area surrounding the moving object 2, and notify the direction in which the obstacle 3 is existing to the radio receiving device 13.

### Embodiment 2.

In above-mentioned Embodiment 1, the example in which the obstacle detecting unit 25 of the obstacle detecting device 12 determines a direction in which an obstacle 3 is existing, and outputs obstacle information showing the direction in which the obstacle 3 is existing to the radio receiving device 13 is shown. The obstacle detecting unit 25 can record a locus of the current position measured by the positioning unit 23, and changes in the direction in which the obstacle 3 is existing so as to determine the shape and the position of the obstacle 3 from both the locus of the current position and the changes in the direction in which the obstacle 3 is existing.
Hereafter, the process carried out by the obstacle detecting unit 25 will be explained concretely.

Fig. 6 is an explanatory drawing showing an example of the shape and the position of the obstacle 3. That is, Fig. 6 is an explanatory drawing of a two-dimensional display showing the shape and the position of the obstacle 3 when viewed from the sky.
In this example, it is assumed that at each of a point A, a point B, and a C point shown in Fig. 6, the positioning unit 23 measures the current position and the obstacle detecting unit 25 determines the direction in which the obstacle 3 is existing.
In this case, the obstacle detecting unit 25 records the locus of the current position and the changes in the direction in which the obstacle 3 is existing while the moving object moves from the point A to the point C.

At each of the point A, the point B, and the point C, the obstacle detecting unit 25 detects an area where the obstacle 3 is existing from both the current position measured by the positioning unit 23 and the direction in which the obstacle 3 is existing.
For example, focusing attention to the point A, a GPS radio wave from a GPS satellite positioned on an extension line from any of line segments A1 and A2 can be received, while a GPS radio wave from any GPS satellite positioned in an area between the line segments A1 and A2 cannot be received. Therefore, the obstacle detecting unit can recognize that the obstacle 3 is existing in the area between the line segments A1 and A2.
Similarly, at the point B, the obstacle detecting unit can recognize that the obstacle 3 is existing in an area between line segments B1 and B2, and, at the point C, the obstacle detecting unit can recognize that the obstacle 3 is existing in an area between line segments C1 and C2.

After detecting the area in which the obstacle 3 is existing at each of the point A, the point B, and the point C in the above-mentioned way, the obstacle detecting unit 25 finally determines that an area in which the areas in which the obstacle 3 have been determined to be existing at those points overlap one another (an area shown with a diagonally shaded box in the figure) is an area in which the obstacle 3 is existing.
Although the shape and the position of this area do not match the shape and the position of the obstacle 3 completely, they match each other roughly.
When determining the area in which the obstacle 3 is existing, the obstacle detecting unit 25 calculates the shape and the position of the area geometrically, and outputs, as obstacle information, the results of the calculation to the radio receiving device 13.

As can be seen from the above description, in accordance with this Embodiment 2, the obstacle detecting unit is constructed in such a way as to record a locus of the current position measured by the positioning unit 23 and changes in the direction in which the obstacle 3 is existing so as to determine the shape and the position of the obstacle 3 from both the locus of the current position and the changes in the direction in which the obstacle 3 is existing. Therefore, this Embodiment 2 offers, for example, an advantage of being able to, when, for example, the radio receiving device 12 controls the radio receiving antennas 31-1 to 31-M to receive an electric wave, carry out a combining processing of combining the electric waves received by the radio receiving antenna 31-1 to 31-M by taking into consideration the distance between the moving object 2 and the obstacle 3, and so on.

### Embodiment 3.

In above-mentioned Embodiment 1, the electric wave reception processing unit 33 lowers the sensitivity of a radio receiving antenna 31-1 oriented toward the direction in which the obstacle 3 is existing and raises the sensitivity of each of radio receiving antennas 31-2 to 31-M each oriented toward a direction in which the obstacle 3 is not existing, and carries out a receiving process of receiving an electric wave, as previously shown. As an alternative, the electric wave reception processing unit 33 can combines the electric waves received by the radio receiving antenna 31-1 to 31-M so as to improve the quality of the reception of the electric waves.
Hereafter, the process carried out by the electric wave reception processing unit 33 will be explained concretely.

There is a high possibility that an electric wave coming from a direction in which the obstacle 3 is not existing is a direct wave, and an electric wave coming from the direction in which the obstacle 3 is existing is a wave reflected by the obstacle 3.
Therefore, the electric wave reception processing unit 33 recognizes that the electric waves received by the radio receiving antennas 31-2 to 31-M each oriented toward a direction in which the obstacle 3 is not existing are direct waves, while the electric wave reception processing unit recognizes that the electric wave received by the radio receiving antenna 31-1 oriented toward the direction in which the obstacle 3 is existing is a reflected wave.

When acquiring the obstacle information showing the shape and the position of the obstacle 3 from the obstacle detecting device 12 (refer to Embodiment 2), the electric wave reception processing unit 33 determines the distance from the moving object 2 to the obstacle 3 with reference to the obstacle information so as to determine the time delay of the reflected wave with respect to each of the direct waves.
When determining the time delay of the reflected wave with respect to each of the direct waves, the electric wave reception processing unit 33 delays each of the direct waves (the electric waves received by the radio receiving antennas 31-2 to 31-M) by the corresponding time delay mentioned above, and then combines the delayed direct waves and the reflected wave (the electric wave received by the radio receiving antenna 31-1) to generate a combined electric wave.
When the electric wave reception processing unit 33 combines the electric waves, the received data holding unit 34 demodulates the combined electric wave to generate data from the combined electric wave, and holds the data.

As can be seen from the above description, the electric wave reception processing unit in accordance with this Embodiment 3 is constructed in such a way as to recognize that the electric waves received by the radio receiving antennas 31-2 to 31-M each oriented toward a direction in which the obstacle 3 is not existing are direct waves, while recognizing that the electric wave received by the radio receiving antenna 31-1 oriented toward the direction in which the obstacle 3 is existing is a reflected wave, and combine the direct waves and the reflected wave in consideration of the time delay of the reflected wave with respect to each of the direct waves. Therefore, the present embodiment offers an advantage of being able to improve the quality of the reception of the electric waves even when the obstacle 3 is existing in an area surrounding the moving object 2.

### Embodiment 4.

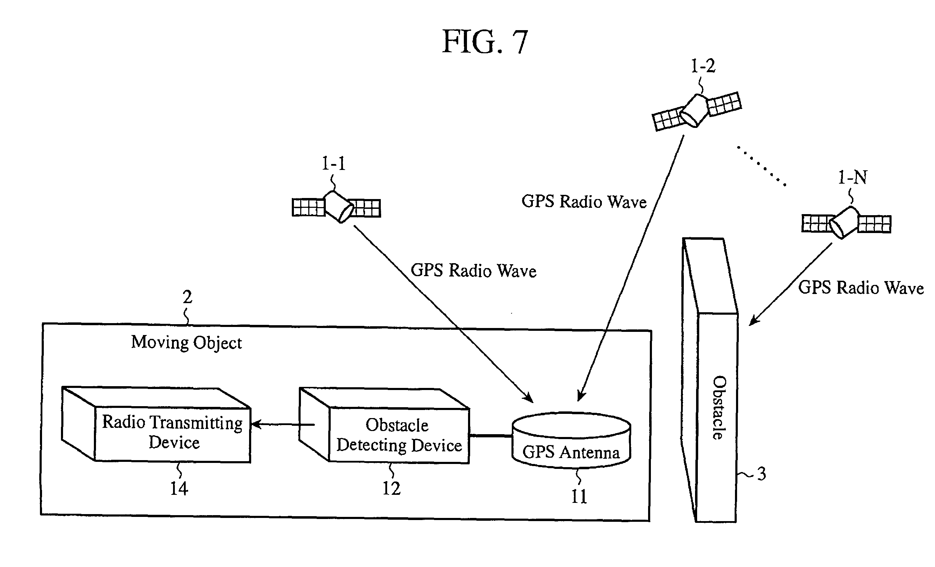

Fig. 7 is a block diagram showing a radio communications system in accordance with Embodiment 4 of the present invention. In the figure, because the same reference numerals as those shown in Fig. 1 denote the same components or like components, the explanation of the components will be omitted hereafter.
A radio transmitting device 14 controls radio transmitting antennas according to the results of detection carried out by an obstacle detecting device 12 so as to transmit electric waves.

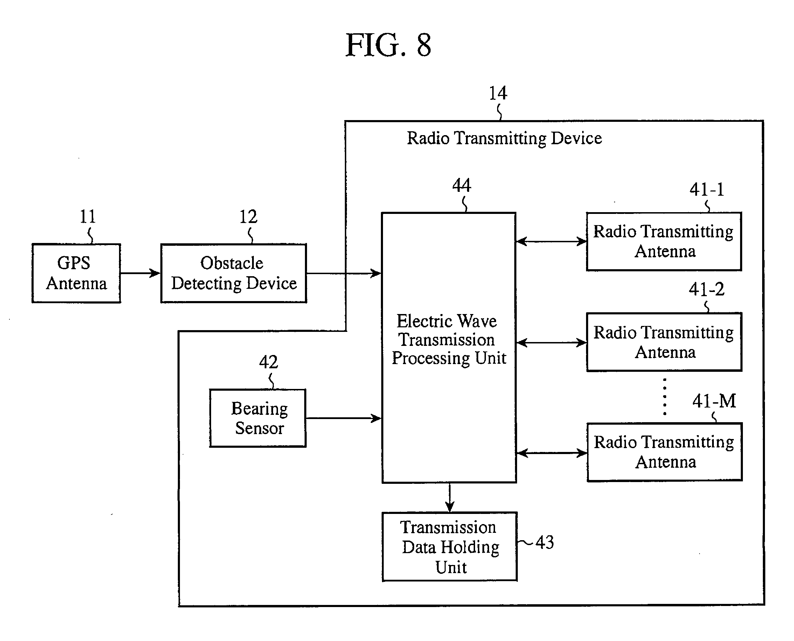

Fig. 8 is a block diagram showing the radio transmitting device 14 in accordance with Embodiment 4 of the present invention. In the figure, the radio transmitting antennas 41-1 to 41-M are arranged in such a way as to surround the perimeter of a moving object 2, and they are oriented respectively toward different directions.
A bearing sensor 42 measures the bearing of the moving object 2 (e.g. the traveling direction of the moving object 2).

A transmission data holding unit 43 carries out a process of modulating an electric wave with transmission data being held thereby, and then outputs the modulated electric wave to an electric wave transmission processing unit 44.
The electric wave transmission processing unit 44 carries out a process of acquiring obstacle information showing a direction in which an obstacle is existing from the obstacle detecting device 12 while acquiring bearing information showing the bearing measured by the bearing sensor 42, and also controlling the radio transmitting antennas 41-1 to 41-M according to both the obstacle information and the bearing information so as to transmit electric waves. The electric wave transmission processing unit 44 constructs an obstacle information acquiring means and a radio wave transmitting means.

Next, the operation of the radio communications system will be explained.
The transmission data holding unit 43 of the radio transmitting device 14 modulates an electric wave with transmission data being held thereby, and outputs the modulated electric wave to the electric wave transmission processing unit 44. When receiving the electric wave from the transmission data holding unit 43, the electric wave transmission processing unit 44 of the radio transmitting device 14 acquires the obstacle information from the obstacle detecting unit 25, and also acquires the bearing information showing the bearing of the moving object 2 from the bearing sensor 42.

When acquiring the obstacle information and the bearing information, the electric wave transmission processing unit 44 refers to the bearing information and the obstacle information to recognize the direction in which the obstacle 3 is existing when viewed from the moving object 2 (the bearing and the elevation angle of the obstacle), and then specifies the radio transmitting antenna oriented toward the direction in which the obstacle 3 is existing, and the radio transmitting antennas each oriented toward a direction in which the obstacle 3 is not existing.
In this example, for the sake of simplicity, it is assumed that the radio transmitting antenna oriented toward the direction in which the obstacle 3 is existing is the radio transmitting antenna 41-1, and the radio transmitting antennas each oriented toward a direction in which the obstacle 3 is not existing are the radio transmitting antennas 41-2 to 41-M.

Because there is a high possibility that an electric wave which is sent out toward a direction in which the obstacle 3 is not existing is normally received by a communications partner without being affected by the influence of the obstacle 3 while an electric wave which is sent out toward the direction in which the obstacle 3 is existing is not normally received by the communications partner due to the influence of reflection or attenuation, the electric wave transmission processing unit 44 does not use the radio transmitting antenna 41-1 oriented toward the direction in which the obstacle 3 is existing, but uses the radio transmitting antennas 41-2 to 41-M each oriented toward a direction in which the obstacle 3 is not existing so as to carry out a transmitting process of transmitting an electric wave.

As can be seen from the above description, in accordance with this Embodiment 4, the electric wave transmission processing unit is constructed in such a way as to acquire obstacle information showing a direction in which an obstacle is existing from the obstacle detecting device 12, and control the radio transmitting antennas 41-1 to 41-M according to the obstacle information so as to transmit an electric wave. Therefore, the present embodiment offers an advantage of being able to improve the quality of the reception of an electric wave in the communications partner which receives the electric wave even when an obstacle 3 is existing.

### Embodiment 5.

In above-mentioned Embodiment 4, the electric wave transmission processing unit 44 does not use the radio transmitting antenna 41-1 oriented toward a direction in which an obstacle 3 is existing, but uses the radio transmitting antennas 41-2 to 41-M each oriented toward a direction in which the obstacle 3 is not existing so as to carry out the transmitting process of transmitting an electric wave, as previously shown. In a case in which an obstacle 3 is existing between the moving object 2 (the GPS antenna 11) and the communications partner, the electric wave transmission processing unit can be on standby to carry out the transmission of an electric wave until the obstacle 3 disappears between the moving object 2 and the communications partner.

More specifically, when the position where the communications partner which will receive the electric wave exists is known, the electric wave transmission processing unit 44 determines whether or not an obstacle 3 is existing between the moving object 2 and the communications partner.
When an obstacle 3 is existing between the moving object 2 and the communications partner, the electric wave transmission processing unit 44 is on standby to carry out the transmission of an electric wave until the obstacle 3 disappears between the moving object 2 and the communications partner, and transmits an electric wave to the communications partner when the obstacle 3 disappears between the moving object 2 and the communications partner.

As can be seen from the above description, in accordance with this Embodiment 5, the electric wave transmission processing unit is constructed in such a way as to, in a case in which an obstacle 3 is existing between the moving object 2 and the communications partner, be on standby to carry out the transmission of an electric wave until the obstacle 3 disappears between the moving object 2 and the communications partner. Therefore, the present embodiment offers an advantage of being able to prevent occurrence of a status in which an electric wave does not reach the communications partner because of an obstacle 3 existing between the moving object and the communications partner.

### Embodiment 6.

In above-mentioned Embodiment 4, the electric wave transmission processing unit 44 does not use the radio transmitting antenna 41-1 oriented toward a direction in which an obstacle 3 is existing, but uses the radio transmitting antennas 41-2 to 41-M each oriented toward a direction in which the obstacle 3 is not existing so as to carry out the transmitting process of transmitting an electric wave, as previously shown. In a case in which an obstacle 3 is existing between the moving object 2 (the GPS antenna 11) and the communications partner, the electric wave transmission processing unit can raise the power of the transmission of an electric wave.

More specifically, when the position where the communications partner which will receive an electric wave exists is known, the electric wave transmission processing unit 44 determines whether or not an obstacle 3 is existing between the moving object 2 and the communications partner.
When an obstacle 3 is existing between the moving object 2 and the communications partner, the electric wave transmission processing unit 44 raises the power of the transmission of an electric wave compared with a case in where no obstacle 3 is existing between the moving object and the communications partner in consideration of reflection and attenuation of electric waves.

As can be seen from the above description, in accordance with this Embodiment 6, the electric wave transmission processing unit is constructed in such a way as to raise the power of the transmission of an electric wave when an obstacle 3 is existing between the moving object 2 and the communications partner. Therefore, the present embodiment offers an advantage of being able to improve the quality of the reception of an electric wave in the communications partner which receives the electric wave even when an obstacle 3 is existing.

### Embodiment 7.

In above-mentioned Embodiments 1 to 3, the moving object 2 is equipped with the radio receiving device 13, as previously shown, while in above-mentioned Embodiments 4 to 6, the moving object 2 is equipped with the radio transmitting device 14, as previously shown. As an alternative, the moving object 2 can be equipped with a radio transmission and reception device having the function of the radio receiving device 13 and that of the radio transmitting device 14 so as to carry out both reception of an electric wave and transmission of an electric wave.

### Industrial Applicability

As mentioned above, the radio communications system in accordance with the present invention is suitable for use as a system which needs to perform transmission or reception of an electric wave normally even when an obstacle 3 is existing.

## Claims

1. An obstacle detecting device comprising:
a GPS receiving means for receiving electric waves from a plurality of GPS satellites so as to extract GPS data from said electric waves;
an operation information extracting means for extracting operation information about the plurality of GPS satellites which is included in the GPS data extracted by said GPS receiving means;
a positioning means for referring to the GPS data extracted by said GPS receiving means so as to measure a current position;
an unlocated satellite detecting means for monitoring a receiving status of the electric waves received by said GPS receiving means so as to detect a GPS satellite which is not being able to be located; and
an obstacle detecting means for, when said unlocated satellite detecting means detects a GPS satellite which is not being able to be located, referring to the operation information extracted by said operation information extracting means so as to grasp a position of said GPS satellite, and detecting a direction in which an obstacle is existing from the position of said GPS satellite and the current position measured by said positioning means.

2. The obstacle detecting device according to claim 1,
**characterized in that** the obstacle detecting means detects the direction in which the obstacle is existing by assuming that said obstacle is existing in a direction of the GPS satellite which is not being able to be located.

3. The obstacle detecting device according to claim 1,
**characterized in that** the obstacle detecting means records both a locus of the current position measured by the positioning means, and a change in the direction in which the obstacle is existing so as to determine a shape and a position of said obstacle from both the locus of said current position and the change in the direction in which said obstacle is existing.

4. A radio receiving device comprising:
a plurality of radio receiving antennas oriented respectively toward different directions;
an obstacle information acquiring means for acquiring obstacle information showing a direction in which an obstacle is existing from an obstacle detecting device; and
a radio wave receiving means for controlling said plurality of radio receiving antennas according to the obstacle information acquired by said obstacle information acquiring means so as to receive an electric wave.

5. The radio receiving device according to claim 4,
**characterized in that** the radio wave receiving means lowers sensitivity of a radio receiving antenna oriented toward the direction in which the obstacle is existing and raises sensitivity of a radio receiving antenna oriented toward a direction in which the obstacle is not existing so as to receive an electric wave.

6. The radio receiving device according to claim 4,
**characterized in that** the radio wave receiving means recognizes, as a direct wave, an electric wave received by a radio receiving antenna oriented toward a direction in which the obstacle is not existing while recognizing, as a reflected wave, an electric wave received by a radio receiving antenna oriented toward the direction in which the obstacle is existing, and combines said direct wave and said reflected wave by taking into consideration a time delay of said reflected wave with respect to said direct wave.

7. A radio transmitting device comprising:
a plurality of radio transmitting antennas oriented respectively toward different directions;
an obstacle information acquiring means for acquiring obstacle information showing a direction in which an obstacle is existing from an obstacle detecting device; and
a radio wave transmitting means for controlling said plurality of radio transmitting antennas according to the obstacle information acquired by said obstacle information acquiring means so as to transmit an electric wave.

8. The radio transmitting device according to claim 7,
**characterized in that** the radio wave transmitting means transmits an electric wave by using a radio transmitting antenna oriented toward a direction in which the obstacle is not existing.

9. The radio transmitting device according to claim 7,
**characterized in that** when the obstacle is existing between the radio transmitting device and a communications partner to which the radio transmitting device transmits an electric wave, the radio wave transmitting means is on standby state to carry out the transmission of the electric wave until said obstacle disappears between said radio transmitting device and said communications partner.

10. The radio transmitting device according to claim 7,
**characterized in that** when the obstacle is existing between the radio transmitting device and a communications partner to which the radio transmitting device transmits an electric wave, the radio wave transmitting means raises transmission power of the electric wave.

11. A radio communications system comprising:
a GPS receiving means for receiving electric waves from a plurality of GPS satellites so as to extract GPS data from said electric waves;
an operation information extracting means for extracting operation information about the plurality of GPS satellites which is included in the GPS data extracted by said GPS receiving means;
a positioning means for referring to the GPS data extracted by said GPS receiving means so as to measure a current position;
an unlocated satellite detecting means for monitoring a receiving status of the electric waves received by said GPS receiving means so as to detect a GPS satellite which is not being able to be located;
an obstacle detecting means for, when said unlocated satellite detecting means detects a GPS satellite which is not being able to be located, referring to the operation information extracted by said operation information extracting means so as to grasp a position of said GPS satellite, and detecting a direction in which an obstacle is existing from the position of said GPS satellite and the current position measured by said positioning means;
a plurality of radio antennas oriented respectively toward different directions;
an obstacle information acquiring means for acquiring obstacle information showing the direction in which the obstacle is existing from said obstacle detecting means; and an electric wave communications means for controlling said plurality of radio antennas according to the obstacle information acquired by said obstacle information acquiring means so as to perform transmission or reception of an electric wave.
